# EUROPEAN PATENT APPLICATION

(11) **EP 1 351 156 A1**
(43) Date of publication of application: **08.10.2003**
(21) Application number: 02425149.8
(22) Date of filing: 14.03.2002
(51) Int. Cl.: G06F 17/27

(54) **System and method for automatically performing functional analyses of technical texts**

(71) Applicant: Universita' Degli Studi di Firenze, 50139 Firenze (IT)
(72) Inventor: Cascini, Gaetano, Dip. Meccanica e Tecnologie Ind., 50139 Firenze (IT)
(74) Representative: Garavelli, Paolo

(57) **Abstract**

A computer based software system and method for performing automatic analyses and comparisons of patents and technical descriptions of engineering systems (as technical reports, usage and maintenance handbooks, overhaul manuals etc.), capable of translating the text of the invention into a block diagram whose graphical representation is made according to the main market standards, i.e. functional models, IDEF models etc., recognizing the components of the system (even if referenced with several nomenclatures), identifying their abstraction level hierarchy up to the lowest detail level as well as their functional and control interactions. Further features are the definition of a database of functional uses of a given component among the analyzed patents and/or a database of the subsystems capable of performing a given task. Such databases of components usages and functions fulfillments allow the fast retrieval of technical solutions and can be easily integrated with CAD systems and conceptual design software tools.

## Description

The present invention refers to a system and a method for performing functional analyses making use of a plurality of inputs.

The number of commercially-usable technologies in technical and end user product fields is growing. Despite a specialization of technologies, efforts are also made to spread technological solutions out of their original area, leading to a much higher number of practical applications in new products and processes.

The opportunity of accessing economical and strategic advantages through patents is often delayed and sometimes reduced by difficulties related both to the number of existing patents to be analyzed and to the formal language used to describe the invention.

Every day, many and many thinkers, inventor and companies waste time trying to evaluate the level of innovation, the feasibility to patent an invention and the originality of contents.

For instance, it is known that for about 50 years well-proven theories (TRIZ by Altshuller G., "Creativity as an Exact Science: The Theory of the Solution of Inventive Problems", Gordon & Breach Science pub., 1984) have been issued to compare and evaluate levels of different inventions. These theories were based on human labor in their application and a great amount of this labor is dedicated to less intensive and valuable applications of the human brain, such as reading and building a mental image of relations between components of invention subject, instead of understanding concepts and the ontology of the invention.

Several software packages do exist that represent technical or technological contents based on the functional representation an engineering subset of mathematical theories of graph representation. Specialized tools have been proven really efficient to speed up the comprehension of concepts, but though with these aids, a lot of time is required to build functional representations of inventions.

The functional analysis is a powerful tool for designers who do not want to introduce only slight optimizations in an existing mechanical system, but also significant innovations in order to build really new products. The functional description of a product is a description at an abstract level, so that different design possibilities can be explored, at a conceptual design stage, by developing functional variants. Moreover, the functional analysis helps the designers in following a systematic approach also in the study of complex systems, by breaking up functions into simpler sub-functions and subdividing the problem into more manageable parts. Finally, the functional analysis can play an important role also in patent-breaking activities: a careful study of a patent from a functional point of view leads to the identification of ambiguous definitions such that it is possible with unremarkable changes to overcome the patent links. Conversely, when writing a new patent, a text-based functional analysis is an effective test of the suitability of the work done.

Functional modeling is often used also at a detailed design stage: following the Suh approach (Suh N.P., "The Principles of Design", Oxford Press, 1990), the function is considered as the desired output and the design is decomposed into functional requirements which are mapped directly with the design parameters at any abstraction level.

Since products are defined and should be designed by the function they have to perform, several authors have classified functions for mechanical design in order to associate subsystems (assemblies of physical parts or components) and sub-functions such that the designer is supplied with a set of modular units to develop the final product. A comprehensive description of those works is given by Kirschman (Kirschman C.F. et al, "Classifying Functions for Mechanical Design", Journal of Mechanical Design (ASME), Vol. 120, September 1998).

Several works have been published to propose comprehensive representations of functions which represent the different aspects of the designers' intention, that is a crucial issue for developing computer-aided conceptual design systems; aim of these works is defining effective ways to represent also the relationships among the functions, i.e. decomposed-into, conditioned-by, enhanced-by and described-as relations (Shimomura et al., "Representation of Design Object Based on the Functional Evolution Process Mode", Journal of Mechanical Design (ASME), Vol. 120, June 1998).

In this context, the inventors have been developing tools, systems and methods to help the designer in performing functional analyses making use of several kinds of inputs. According to the definition of product architecture given by Ulrich (Ulrich, K.T., "The Role of a Product Architecture in the Manufacturing Firm", Research Policy, vol. 24, 1995), that is the way in which the designer relates functional elements to physical components, much research in the area has been directed toward the process of mapping functions to components. The definition of some general criteria to map functions to the assembly features of a CAD system is understandably useful; this task has been approached also by Line et al. (Line J.K. et al, "Calculation of Product Architecture Metrics Within a Solid Modeler", accepted for publication on Proceedings of the Institution of Mechanical Engineers Part B-Journal of Engineering Manufacture, 2001) even if with a completely different strategy.

Nowadays it is possible to use several types of techniques and technologies to analyze digital text and produce a facilitated way to access and read the contents. Especially for scientific and patents digital files, these technologies demonstrate their value, but a lot of work has still to be done in allowing fast and efficient comparison between similar document, identifying novelty in the publication or order publication according to novelty level.

Despite enormous efforts in the conception and development of software for automatic analysis of digital documents, both information extraction and information representation are usually from the "same field" of implemented technologies/techniques:
(1) concept extraction technologies very often supersede existing ones "in toto", forgetting historical backgrounds and laws embedded in original document layout or in previous technologies;
(2) a concept representation technology/technique very often comes with embedded viewing techniques more related to extraction technology than to the scope of representing to humans contents for the very final purposes of performed analysis.

In such a background it is a logical consequence that automatic text analyses lead to categorization of concepts via taxonomy or similar text-based techniques and that well structured data such as programming languages or databases can be represented via graph theory representations; these representations both are natural in their field and indicate real advantages in evolving a further step in these field, hybridizing text- and graph-based analysis of digital documents with text and graph representation of their contents.

A computer-based software system and a method according to the principles of the present invention solve the problems described in the previous paragraph due to the ability to perform automatic analyses and comparisons of patents and technical descriptions of engineering systems (as technical reports, usage and maintenance handbooks, overhaul manuals etc.), capable to translate the text of the invention into a block diagram whose graphical representation is made according to the main market standards, i.e. functional models, IDEF models etc.

In fact, the proposed system, according to the principles of the present invention, is capable to recognize the components of the system described in the analyzed document, even if they are referenced with several nomenclatures. Further, the hierarchy of the recognized components, in terms of detail/abstraction level, can be identified and a classification in categories like "assembly", "part", "portion" can be performed. Furthermore the system is capable to analyze the functional interactions among the components and to identify the secondary products and the main product of the analyzed system.

The above and other objects and advantages of the invention, as will appear from the following description, are obtained by a as method and a system as claimed in Claims 1 and 15, respectively. Preferred embodiments and non-trivial variations of the present invention are claimed in the dependent Claims.

These tasks are performed by the Text Analyzer Modules that interact with each other and make use of the content of a customizable database of stop words and analogue words as described below. The results of this analysis can be augmented making use of a semantic processor, as the one described in US-A-6,167,370, capable to analyze an electronic document in order to extract from each sentence the Subject, the Action and the Object. The results of the analysis of the Text Analyzer Module can be supplied to the user in different ways, according to the functionalities of the Post Processing Module of the present invention.
(1) The first output mode consists in supplying the user with a comprehensive graphical representation of the analyzed system, that allows a quick overview of the system's components, their hierarchy classification and their functional interactions.
(2) A comparison between the results of different analyses can be executed according to a set of quantitative means capable to evaluate the relevance, the complexity and the level of innovation (according to the Altshuller definition) of the examined systems and (optionally) to follow their evolution pattern.
(3) The functions performed by or accomplished on a component in all the examined systems are stored in a database so that all possible functional uses of that component can be easily retrieved.
(4) The components capable of performing a given function, according to the results of the accomplished analyses, are stored in a database, in order to have a tool for an easy retrieval of technical solutions to perform a given task.

The databases described in (3) and (4) of the previous list can be easily integrated with CAD systems and conceptual design software tools.

The present invention will be better described by some preferred embodiments thereof, given as a non-limiting example, with reference to the enclosed drawings, in which:
- FIG. **1** is a schematic representation of an exemplary embodiment of the system according to the principles of the present invention;
- FIG. **2** is a schematic representation of the main architectural elements of the system according to the principles of the present invention;
- FIG. **3** is a schematic representation of the Components Classification Module of the system according to the principles of the present invention;
- FIG. **4** is a schematic representation of the method for recognizing components of the system according to the principles of the present invention;
- FIG. **5** is a schematic representation of the method for classifying the components of the system according to the principles of the present invention;
- FIG. **6** is an example of the graphical visualization of the information extracted from an analysed invention;
- FIG. **7** is an example of the list of components with their detail level DL and the corresponding supersystem extracted from the description of the system illustrated in Fig. 6;
- FIG. **8** is an example of the list of secondary products with their main product probability value MPPV evaluated according to the two approaches described in the detailed description of the present invention, extracted from the description of the system illustrated in Fig. 6;
- FIG. **9** is an example of the list of functional interactions between the identified components of the invention shown in Fig. 6; and
- Fig. **10** is an example of the detail level run along the description of the invention shown in Fig. 6.

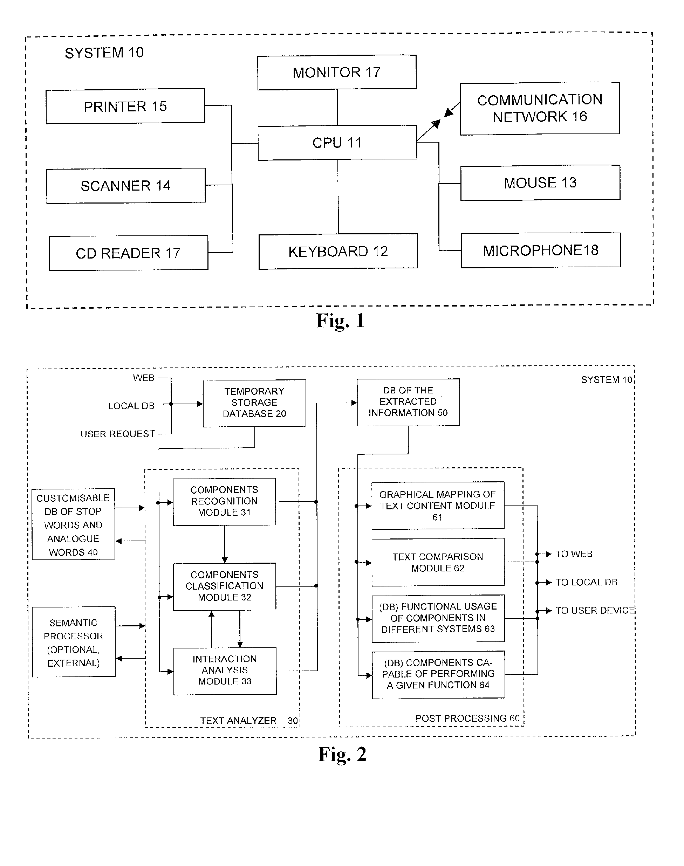

One exemplary embodiment of the present invention, as depicted in Fig. 1, includes: a CPU 11 that could comprise a general purpose personal computer or network server or minicomputer, with standard user input and output drivers, such as keyword 12, mouse 13, scanner 14, CD reader 17 and printer 15. The system also includes standard communication ports 16 to LANs, WANs, and/or public or private switched networks to the Web.

A user can input the text to be analysed by typing it directly with the keyboard 12 or with other computer devices (i.e. scanner 14 and OCR system, microphone 18 and speech recognition software etc.), or by selecting the documents on local storage means, LANs or on the Web.

According to the scheme of Fig. 2, an exemplary embodiment of the present invention is composed of a Temporary Storage Database 20, a Text Analyser Module 30, a Customisable Database of Stop Words and Analogue Words 40, a Database of the Extracted Information 50 and a Post Processing Module 60.

The text to be analysed, entered by the user, is stored into the Temporary Storage Database 20. Such text is processed by the Text Analyser Module 30, making use of the Database of Stop Words and Analogue Words 40 and (optionally) of a commercially available semantic processor (external to the system described in the present invention), according to the methodology described in the next paragraphs.

The results of the text analysis are stored in the Database of the Extracted Information 50.

The Post Processing Module 60 supplies the user with the information contained in the Database 50 organized in several formats as described in the following paragraphs, for an effective and rapid usage of the analysis results. The output can be sent to any user device, to a local storage database or to the Web.

The Components Recognition Module 31 allows the identification of all system components described in the examined text (i.e., for a patent, the components of the invention).

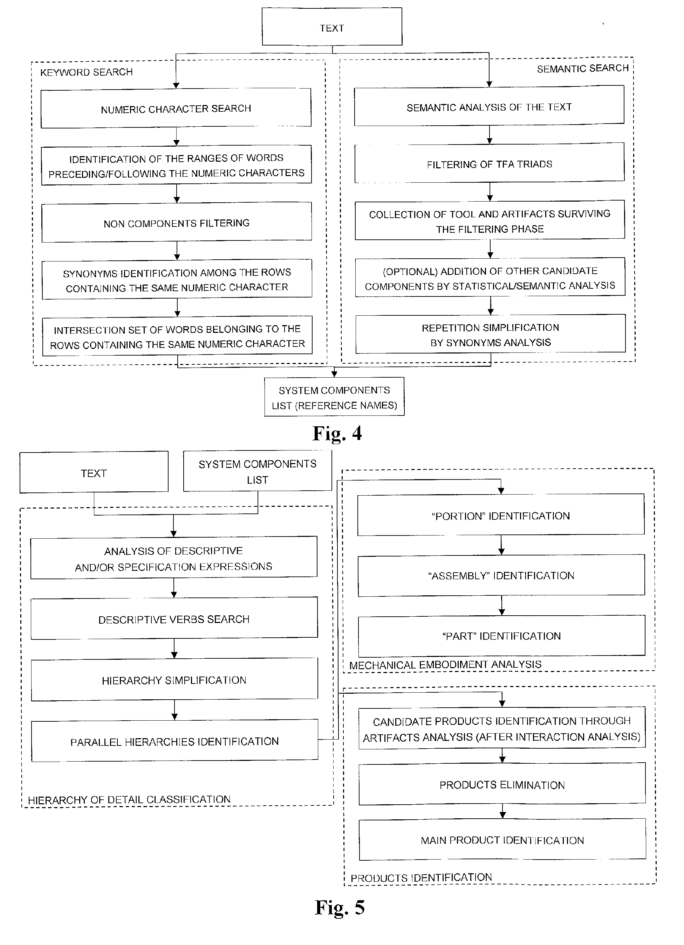

This task can be performed following two different techniques: keywords search and semantic search (Fig. 4).

The keyword search (Fig. 4, left) is based on the rule for patent writing (for example Title 37 of the U.S. Code of Federal Regulations) so that each component of the system must be numbered so that the same reference number is used all over the description and the illustrations of the invention.

The following procedure is adopted:
1) search for the numeric characters in the text;
2) for each number, a range of preceding and following words is taken into account; the range dimension is customisable by the user with a different value for the words preceding the numeric characters and the ones following them; a default value of five preceding/five following words is defined; each range constitutes a row of the matrix of candidate components;
3) filtering of the "non component" terms: the rows containing words belonging to set a) of the Stop Words and Analogue Words Database 40 are deleted;
4) among the rows containing the same numeric character, recognition of synonyms and analogue words: the synonyms list is contained in set b) of the Stop Words and Analogue Words Database 40;
5) identification of the intersection set of words belonging to the rows containing the same numeric character; such a set of words is assumed as the representative name of the component referenced by the numeric character of those row. If the first word following the numeric character is "of", the intersection set must be evaluated just taking into account the words on the left side of the number, while the words on the right side are used by the Components Classification Module 32.

The steps 4) and 5) can be properly inverted without any changes in the results.

The semantic search (Fig. 4, right) is based on the assumption that in a technical description of a system, the subjects and the objects of the sentences are in many cases the components of the system itself, i.e. they are, according to the Altshuller's theory, a basic functional triad TFA (Tool, the subject; Field, the action; Artifact, the object). If the Field of a triad TFA is a non significant verb (from a functional point of view), the corresponding Tool and Artifact lose their role of candidate component of the system. The procedure consists in:
1) processing with a commercially available semantic processor (for example Cobrain™, Knowledgist™, Phrasys™, Semantic Explorer™, CREAX, Kiwilogic™ etc.) the text to be analysed, hence extracting from each sentence a triad TFA;
2) filtering the triads TFA (Tool-Field-Artifact) containing a Field belonging to the set f) of the Stop Words and Analogue Words Database 40;
3) collecting the Tools and the Artifacts that have survived the previous filtering step;
4) (optionally) adding a further set of candidate components by using commonly available techniques to identify words representative of the content of a text (i.e. statistical analyses, cluster engine, Bayesian network etc.); 5) among all candidate components (Tool and Artifacts that survived the filtering phase) noun repetitions are clustered also taking into account the synonyms list of set b) of the Stop Words and Analogue Words Database 40.

The Component Recognition task can be performed following alternatively or together the keyword search or the semantic search approaches. Combining these two techniques, it is possible also to identify supersystems: Tools and Artifacts not belonging to the reference numbered components of the examined system, clearly are external to the system itself.

The product of the Component Recognition Module is a list of names, representative of the conceptual components of the examined system; a reference number (the same reference number used in the text to describe the system) is associated with each component name as well as a list of the different denominations used in the system description to identify that component (synonyms, pronouns, adjectives that can be lost due to the intersection at step 5) of the keyword search approach, if sometimes they have been omitted).

The results of the Components Recognition Module 31 are stored in the Database of the Extracted Information 50.

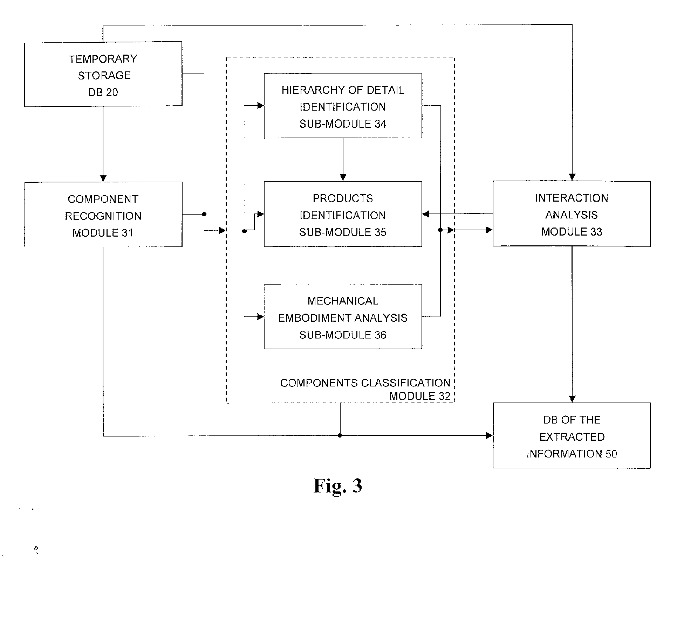

The Components Classification Module 32 orders and classifies the components identified by the Components Recognition Module 31 according to three main criteria: detail/abstraction level; main product and secondary products of the system; role in the assembly. An exemplary embodiment of the Components Classification Module 32 according to the principles of the present inventions is shown in Fig. 3: it consists in three sub-modules, respectively the Hierarchy of Detail Identification Sub-Module 34, the Product Identification Sub-Module 35, the Mechanical Embodiment Analysis Sub-Module 36.

A schematic representation of the method for classifying the components of the systems according to the principles of the present invention is shown in Fig. 5.

The procedure consists in the following steps:
1) analysis of the descriptive locutions and of the specification's expressions like "... of ...": for example, as described in the Component Recognition by keywords search technique, sometimes the word following the numeric character representing the reference number of a component is the preposition "of", followed by another component (i.e. side N of the piston M; arm N of the support M etc.); in these cases the component preceding the preposition "of" is assumed as a subsystem of the component following the same preposition "of"; in other words the detail level of the first component is at least one step deeper than the detail level of the second one;
2) descriptive verbs search: the list of descriptive verbs is contained in the set d) of the Stop Words and Analogue Words Database 40. A descriptive verb is a verb like "comprise", "to be made of", "to be constituted by" etc. If a range of words around a descriptive verb (the range amplitude is a function of the verb since, according to its meaning, one or more subjects and one or more objects are expected to be found) contains components identified by the Components Recognition Module 31, it is assumed that the components preceding the descriptive verb are subsystems/supersystems of the components following it, as a function of the meaning of the verb itself: for example, from the sentence "the arm support comprises two guide rails, a screw drive and a carrier" it can be understood that the "arm support" is a Supersystem respect to the "guide rails", the "screw drive" and the "carrier", i.e. it is at a more abstract level.
   This search is performed taking into account also all the alternative denominations for each system component stored by the Components Recognition module 31.
   As well as for the Components Recognition task, the capabilities of the present inventions can be augmented by using a semantic processor, since a more reliable identification of the components that effectively are the subject or the object of the descriptive verb can be guaranteed: let us consider the previous example modified as follows: "the arm support comprises two guide rails, a screw drive arranged between the opposite guide rails, and a carrier"; in this case the clause "arranged between the opposite guide rails" does not contain any objects of the verb "comprise", but it contains an identified component of the system (the "guide rails").
3) hierarchy simplification: it may happen that the detail level hierarchy defined according to the previous two steps shows some hierarchical "jumps", i.e. cases like "A is a supersystem for B", "B is a supersystem for C" and in the text C is mentioned as a subsystem of A; analysing the whole list of hierarchical links between the components of the system, all those jumps are eliminated;
4) parallel hierarchies identification: it may happen that one or more components are identified as subsystems of two or more components at the same detail level; for example: A is a supersystem for A1 and A2; B is a supersystem for B1 and B2; A2 and B1 are subsystems of C. Such "parallel" hierarchies are properly stored since they usually correspond to the different functions performed by the same component.

A Detail Level (DL) is assigned to each component so that the maximum abstraction level is represented by a DL=0 and the DL of each subsystem is one level greater than the DL of the corresponding supersystem.

The results of this first classification phase can be further processed to identify the role of a component in the assembly described in the text: it is possible to assign to each component an attribute as "assembly", "part" or "portion" in order to allow a more effective data exchange with CAD/PDI/CRM systems; this information can be transferred through commonly used data exchange formats like IGES, STEP, IDEF etc.
1) an attribute "portion" is assigned to all the components whose name contains words belonging to set e) of the Stop Words and Analogue Words 40, like "side of...", "upper part of..." etc. In a CAD system these components correspond to geometric entities like modelling features, faces, edges, vertex etc.
2) an attribute "assembly" is assigned to all components having at least a subsystem that in the previous step has not been labelled as "portion";
3) an attribute "part" is assigned to all components not labelled in the previous two steps.

Such classification allows a direct link to the Feature Tree of a Part model and/or to the Assembly Tree of an Assembly model in a CAD system, hence integrating the conceptual model of a mechanical system to its embodiment.

A third way to classify the components of the examined system consists in identifying which of them are secondary products of the system itself and among these which is the main product. This classification requires the results of the Interaction Analysis Module 33 and is described below.

The results of the Components Classification Module 32 are stored in the Database of the Extracted Information 50.

The Interactions Analysis Module 33 allows the identification of the functional links existing between the recognized components of the examined system. Again two different approaches (keywords search based and semantic based) can be followed:
1) a search for the sequences of words containing the names of two components of the system separated by a verb not belonging to the list f) of the Stop Words and Analogue Words Database 40 is performed; such a verb is assumed as a Field of a TFA triad; the components preceding and following the verb are assumed as the Tool and the Artifact of the triad, as a function of the meaning and of the form (active/passive) of the verb itself;
2) a search for the sequences of words containing at least one component of the system and a verb belonging to the set c) of the Stop Words and Analogue Words Database 40 (significant verbs from a functional point of view) is performed: such a verb is assumed as the Field of a TFA triad and the component is assumed as the Tool or the Artifact of the TFA as a function of its position respect to the verb (following or preceding), and of the meaning and the form (active or passive) of the verb. It is clear that the list c) of the Stop Words and Analogue Words Database 40 must contain any form for the verbs belonging to that list.

An alternative embodiment of the same feature makes use of a semantic processor: for each TFA triad, if both the Tool and the Artifact are components of the system and the Field is a verb not belonging to the list f) of the Stop Words and Analogue Words Database 40, then that TFA triad is assumed as a basic functional block of the system; otherwise if just one among the Tool and the Artifact is a component of the system, but the Field is a verb belonging to the set c) of the Stop Words and Analogue Words Database 4 then the missing Tool/Artifact is assumed as an External Component of the system and the complete triad is assumed as a basic functional block of the system. Finally it may happen that the Tool is a component of the system, but the pair Field-Artifact itself is a function of the system (for example, provide-tension = tighten); if a pair Field-Artifact among those extracted by the semantic processor belongs to set g) of the Stop Words and Analogue Words Database 40, then the subject of the verb is assumed as the Tool of the triad and the pair Field-Artifact is translated according to set g) table of the Stop Words and Analogue Words Database 40 in a functional Field. The search for the Artifact of such a function can be demanded to the user or performed by looking for the first identified component following the preposition typically associated to that pair Field-Artifact (In the same table of the Stop Words and Analogue Words Database 40 one or more typical preposition following each pair Field-Artifact are cited). For example, in the sentence "the upper end of the piston contacts the arm to provide tension on the arm which..." the semantic processor identifies the triad "upper end-provide - tension" from which the Tool "upper end", the Field "tighten" and the Artifact "arm" (as the component following the preposition "on") are extracted.

At the end of the Interactions Analysis phase, all Tools/Artifacts that have not been identified as system components by the Component Recognition Module 31 are assumed as External Systems and they can be used to link or combine two or more inventions, technical systems and/or to highlight the relations between the examined system and the other systems belonging to the State of the Art of that field of application.

Typically, if the text to be analysed is a patent, the Interactions Analysis is performed on the "Detailed description of the invention" and/or on the Abstract and/or on the Claims.

At the end of the interactions analysis performed by the Interactions Analysis Module 33, all identified triads TFA are stored in the Database of the Extracted information 50, as well the position in the examined text of the sentence from where such a triad has been extracted: the position is evaluated just numbering with a sequential order all the sentences of the examined text, distinguishing a sentence from another on the basis of the character "." or the ASCII character Carriage Return.

Combining the results of the Components Recognition Module 31, the Hierarchy of Detail Identification Sub-Module 34 and the Interactions Analysis Module 33, it is possible to identify all secondary products and among these the main product of the examined system. In the exemplary embodiment of the present invention shown in Fig. 3, this task is performed by the Product Identification Sub-Module 35 according to the following procedure:
1) each Artifact is a product of its Tool through the action of the Field of the TFA triad; hence, at a first stage, each Artifact is assumed as a secondary product of the examined system;
2) a secondary product loses this property (so becoming a "standard" component of the system) in the following cases:
   a. in the detail level hierarchy the candidate secondary product has at least two abstraction levels above, i.e. its DL (Detail Level) is greater than or equal to 2;
   b. the number of functional interactions so that the candidate secondary product is a Tool is greater than or equal to the number of functional interactions so that it is an Artifact;
3) for each secondary product the ratio between the number of interactions so that it is an Artifact and the number of interactions so that it is a Tool is evaluated; such a ratio is assumed as the Main Product Probability Value (MPPV);
4) alternatively, if the examined text is a patent, the MPPV can be evaluated as the sum of the following different probability values:
   a. checking if a secondary product is mentioned as an Artifact in the first two claims of the patent; exemplary partial probability value = 50%;
   b. checking if a secondary product is mentioned as an Artifact in the abstract of the patent; exemplary partial probability value = 30%;
   c. checking if a secondary product is mentioned as an Artifact in the title of the patent; exemplary partial probability value = 15%;
   d. evaluating how many times the secondary products are mentioned in the whole patent and normalizing these values with respect to the maximum frequency; this normalized value multiplied by 100 is assumed as the partial probability value, but in any cases it must be lower or equal to a predefined value (for example, 5%);
   e. checking if a secondary product is an Artifact of a Field present as a Field in the first two claims of the patent as well; exemplary partial probability value = 30%;
   f. checking if a secondary product is an Artifact of a Field present as a Field in the abstract of the patent as well; exemplary partial probability value = 20%;
   g. checking if a secondary product is an Artifact of a Field present as a Field in the title of the patent as well; exemplary partial probability value = 10%;
   h. evaluating how many times the Fields acting on the secondary product (considered as an Artifact) are mentioned in the whole patent and normalizing these values respect to the maximum frequency; this normalized value multiplied by 100 is assumed as the partial probability value, but in any cases it must be lower than or equal to a predefined value (for example, 10%);
   i. evaluating how many times the pairs Field-Artifact, so that the Artifact is a secondary product, are mentioned in the whole patent and normalizing these values respect to the maximum frequency; this normalized value multiplied by 100 is assumed as the partial probability value, but in any cases it must be lower than or equal to a predefined value (for example, 30%).

The Post Processing Module 60 supplies the content of the Database of the Extracted Information 50 to the user, organizing such data in four different forms as function of the scope of the analysis. An exemplary embodiment of the Post Processing Module 60 according to the principles of the present invention is composed of four sub-modules as shown in Fig. 2: a Graphical Mapping of Text Content Module 61, a Text Comparison Module 62, a Database of the Functional Uses of the examined Components 63, a Database of the Components capable of performing a given function 64.

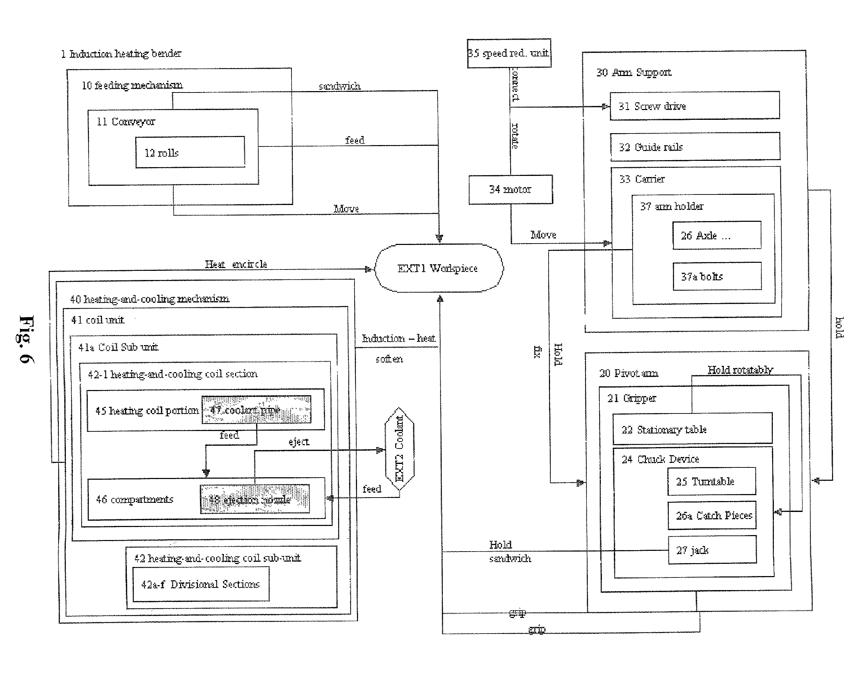

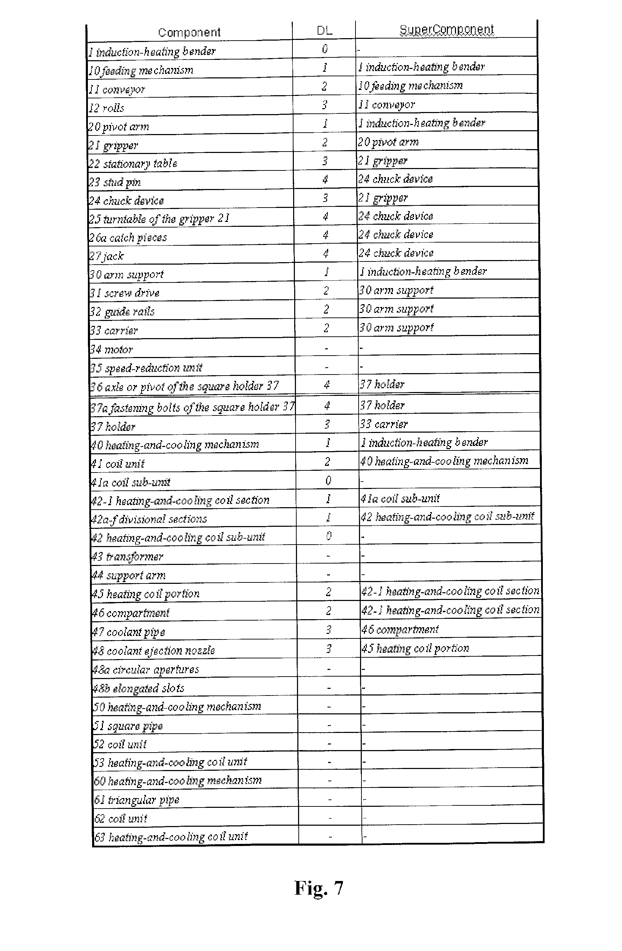

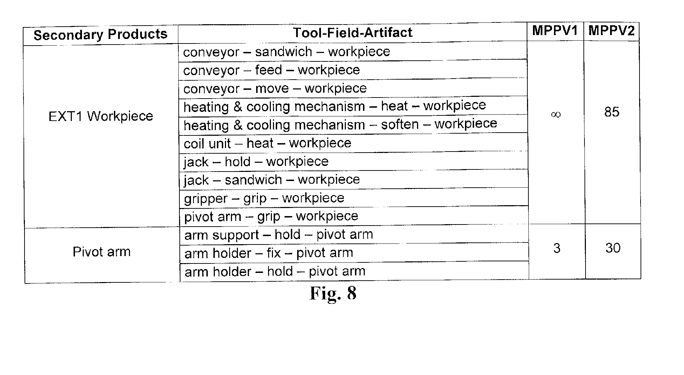

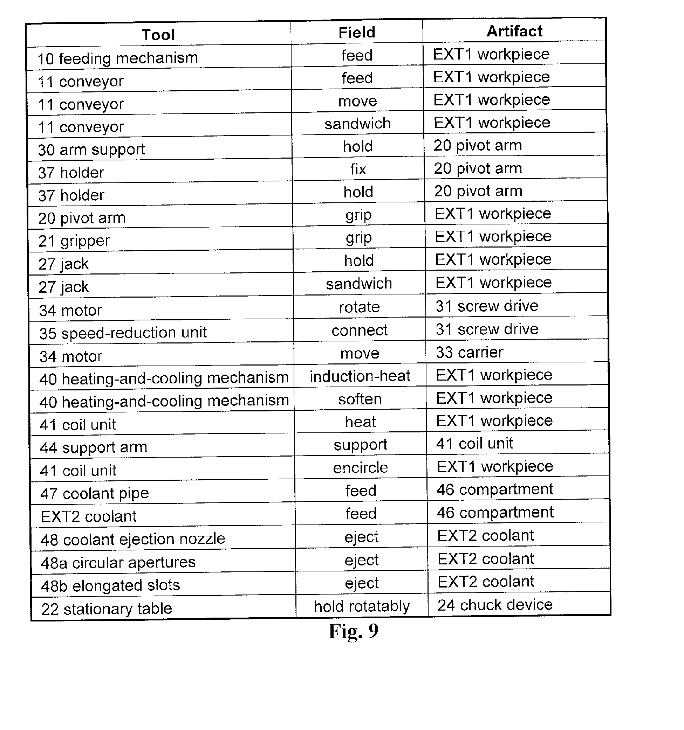

The Graphical Mapping of Text Content Module 61 is an effective tool to output all information extracted by the analysis of the Text Analyser Module 30: the results of the Components Recognition, the Components Classification and the Interactions Analysis phases are represented in a diagram, as in Fig. 6, so that:
1) each identified component of the system is represented by a rectangle labelled with its reference number and the representative name defined by the Components Recognition Module 31; each identified component or subject external to the system is represented by an hexagon labelled with the string "EXT", a sequential number and the representative name defined by the Components Recognition Module 31; the main product is represented by an ellipse labelled with the same criteria shown above for internal/external components;
2) the detail level hierarchy determined by the Classification Module 32 is represented nesting the components at a deeper detail level inside the components at a more abstract level;
3) the functional interactions between the identified components are represented with arrows pointing from the Tool to the Artifact, labelled with the Field, according to the results of the Interactions Analysis Module 33;
4) upon request, some summarizing tables can be supplied to the user:
   a. the list of components with their detail level DL and the corresponding supersystem (Fig. 7);
   b. the list of secondary products as pairs Field-Artifact with their main product probability value MPPV (Fig. 8);
   c. the list of partial probability values evaluated according to the procedure detailed in the description of the Products Identification Sub-Module 35 (Fig. 8);
   d. the list of functional interactions between the identified components (Fig. 9);
   e. the list of pairs Field-Artifact so that the Artifact is the Main Product of the system.

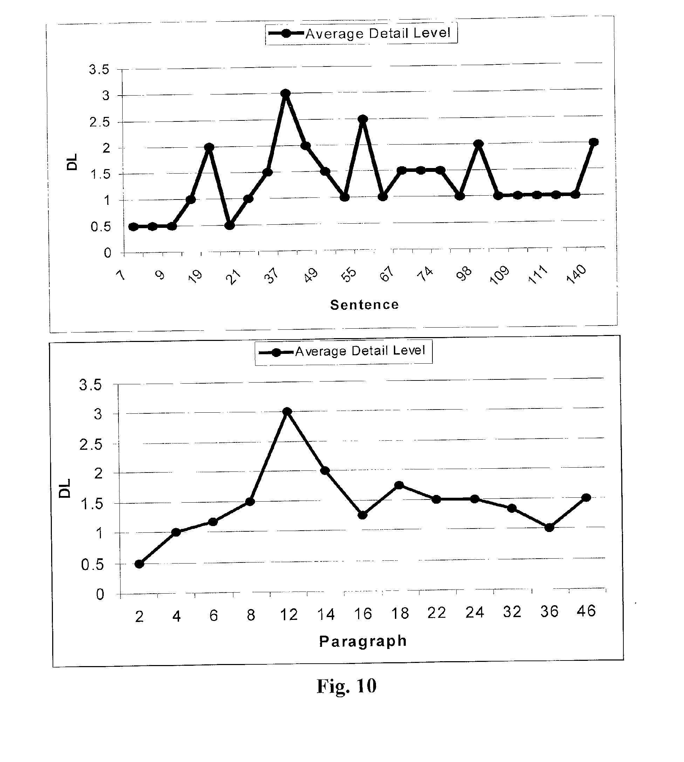

The Text Comparison Module 62 allows the comparison between two or more systems descriptions according to the following parameters:
1) comparison between the "system diameter", that is the number of detail levels identified by the Components Classification Module 32;
2) comparison between the number of internal components of the examined systems, both taking into account the whole list of identified components and each detail level;
3) (if the analysis of the Mechanical Embodiment Analysis Sub-Module 36 has been performed) comparison between the number of "assembly", "part" and "portion" of the examined systems;
4) comparison between the number of interactions identified by the Interactions Analysis Module 33; if two or more Fields are associated to the same pair Tool/Artifact a check to eliminate synonymous Fields is performed taking into account set i) of the Stop Words and Analogue Words Database 40;
5) comparison between the number of interactions (counted as in step 4) acting on components at a same Detail Level; it can be highlighted if these components belong to the same supersystem or not;
6) comparison between the number of interactions (counted as in step 4) acting on components at a different Detail Level; it can be highlighted if these components are one subsystem of the other or not; the "hierarchical distance" between the interacting components, i.e. the difference between their detail levels, is also taken into account;
7) comparison between the number and the lengths of the branches present in the functional diagram of the examined systems (as the one in Fig. 6) evaluated starting from the Main Product of the systems themselves;
8) comparison of the components at the same rank: the rank of a component is defined as the minimum distance, in terms of number of interactions, that link the Main Product of the system with the component itself;
9) analysis of the detail level run along the description of the examined system (Fig. 10): the Interactions Analysis Module 33 stores the position in the text of each identified interaction TFA; the detail level of the Tool and the Artifact in a sentence is assumed as the detail level of the description, hence it is possible to analyse the detail level run in the examined test and to compare such a run in different texts. The analysis of the peaks of the Detail Level run along the description of a system allows the identification of the core and the secondary peculiarities of the system itself.

The Database of Functional Usage of Components in Different Systems 63 stores all functional interactions associated with homonymous components in all examined texts, recording the reference to the source text and the role of the component in the TFA triad.

A comparison between the way a same component is used in different systems can be supplied to the user.

The Database of Components Capable of Performing a Given Function 64 stores:
1) all Tools associated with homonymous Fields found in all examined texts, recording the reference to the source text and the complete TFA triad;
2) all Tools associated with homonymous pairs Fields-Artifacts found in all examined texts, recording the reference to the source text and the complete TFA triad.

A comparison between the way a same action (Field) or a same function (Field-Artifact) is performed in different examined systems can be supplied to the user.

The Stop Words and Analogue Words Database 40 is composed of eight set of words, all customisable by the user both manually or through an automatic extraction procedure described below:
1) the user supplies to the system a set of typical documents of the field of application he is interested in;
2) a semantic analysis is performed through a commercially available semantic processor (for example Cobrain™, Knowledgist™, Phrasys™, Semantic Explorer™, CREAX, Kiwilogic™ etc.) and a table of Tools and Artifacts and their occurrence is stored;
3) by comparing the table defined in the previous step and the complete Database 40, it is possible to automatically customise the Filters and Synonyms lists, hence creating typical subsets of the Database 40 labelled with the field of application of the documents processed in step 1).

The database is composed of the following sets:
a) list of stop keywords for words adjacent to numeric characters during the Components Recognition task; this set is typically composed of references to Figures, Patents or other documents, units etc.
b) table of synonyms of candidate components, at different detail levels (for example, portion, side, end; piston, plunger etc.);
c) list of typical Fields of the functionalities requested in a given field of application;
d) table of descriptive verbs like "to comprise", "to be made of", "to be constituted by", etc. Such a list must take into account all the forms that these verbs can assume, also due to conjugation irregularities; for example, together with the infinitive "to comprise" are stored the forms "comprise", "comprises", "comprised", "comprising" etc.
e) list of terms describing a portion of a component, as "end", "side", "face", "part" etc.
f) list of verbs that are not meaningful from a functional point of view;
g) table of pairs Field-Artifact, their translations in a functional verb and one or more prepositions typically associated to that locution, used to search the Artifact automatically; for example, "provide tension", "tighten", "on";
h) table of the synonyms of the functional verbs representing a Field.

The Stop Words and Analogue Words Database 40 allows the customisation of the system described in the present invention, but some other customisations are also available:
1) the activity of the Components Recognition Module 31, the Component Classification Module 32 and the Interactions Analysis Module 33 can be monitored step by step by the user, who may compare the extracted information with its source sentence, or can be performed automatically even if with a lower reliability;
2) the user can specify a list of components (Tools/Artifacts) and/or functions (Fields) to focus the Interactions Analysis on, so that just the corresponding functional sub-diagrams are extracted;
3) the search for Secondary Products and/or the Main product of the examined systems can be limited to the components external to those systems.

## Claims

**1.** Method for performing automatic analyses and comparisons of patents and technical descriptions of engineering systems, based on classifying functions to associated subsystems and sub-functions as well as functional elements to associated physical components, organizing such data in different forms according to the scope of the analysis, **characterized in that** all system components described in an examined text are identified, ordered and classified as a hierarchy in terms of detail/abstraction level and, further, in term of categories like "assembly", "part", "portion", all functional links existing between said identified components of the examined system being recognized so that all secondary products and, among these, a main product of the examined system are identified.

**2.** Method according to Claim 1, **characterized in that** the identification of all system components described in the examined text is performed according to the following procedure:
a. searching for numeric characters in a text;
b. for each number, taking into account a range of preceding and following words, each range constituting a row of the matrix of candidate components;
c. filtering "non component" terms, deleting rows containing words adjacent to a numeric character;
d. among those rows containing a same numeric character, recognising synonyms and analogue words;
e. identifying an intersection set of words belonging to the rows containing the same numeric character, such a set of words being assumed as a representative name of the component referenced by the numeric character of those row.

**3.** Method according to Claim 1, **characterized in that** the identification of all system components described in the examined text is performed with an assumption that said components interact as subjects and objects of a basic functional triad TFA (Tool, a subject; Field, an action; Artifact, an object) according to the following procedure:
a. extracting from each sentence a triad TFA (Tool-Field-Artifact), for example from an XML document or by using a semantic processor;
b. filtering the triads TFA containing a list of verbs not significant from a functional point of view;
c. collecting Tools and the Artifacts that have survived the previous filtering step;
d. (optionally) adding a further set of candidate components by using commonly available techniques to identify words representative of a content of a text;
e. among all the candidate components (Tool and Artifacts that survived the filtering phase), removing noun repetitions, also taking into account synonyms of candidate components.

**4.** Method according to Claim 1, **characterized in that** a detail/abstraction comparison criteria is applied to classify system components according to the following steps:
a. analysing descriptive locutions and of specification's expressions like "... of ...";
b. assigning to a component preceding a preposition "of" a role of subsystem of a component following the same preposition "of";
c. searching descriptive verbs like "to comprise", "to be made of", "to be constituted by" etc., taking into account all forms that these verbs can assume, also due to conjugation irregularities;
d. assuming that components preceding a descriptive verb are subsystems/supersystems of components following the descriptive verb itself as function of a meaning of such a verb;
e. performing such an analysis taking into account all alternative denominations of each component.

**5.** Method according to Claim 1, **characterized in that** a Detail Level (DL) is assigned to each component, said DL representing a maximum abstraction level by a DL=0, each subsystem being one level greater than the DL of a corresponding supersystem.

**6.** Method according to Claim 5, **characterized in that** for several Detail Levels (DL) assigned to a same component, so that a maximum abstraction level is represented by a DL=0 and the DL of each subsystem is one level greater than the DL of a corresponding supersystem, a hierarchy simplification is performed eliminating all hierarchical jumps.

**7.** Method according to Claim 5, **characterized in that** for a same Detail Level (DL) assigned to a same component so that a maximum abstraction level is represented by a DL=0 and the DL of each subsystem is one level greater than the DL of a corresponding supersystem, a parallel hierarchy identification occurs taking into account such "parallel" hierarchies.

**8.** Method according to Claim 1, **characterized in that** all components are further processed to identify a role of a component in an assembly described in a text according to the following procedure:
a. an attribute "portion" is assigned to all components whose name contains words describing a portion of a component, as "end", "side", "face", "part", etc.;
b. an attribute "assembly" is assigned to all components having at least a subsystem that in the previous step has not been labelled as "portion";
c. an attribute "part" is assigned to all components not labelled in the previous two steps.

**9.** Method according to Claim 1, **characterized in that** an identification of functional links existing between recognized components of the examined system is performed according to the following steps:
a. searching for sequences of words containing names of two system components separated by a verb, excluding a triad component-verb-component so that the verb is not significant from a "functional point of view";
b. assuming components that precede and follow said verb as the Tool and the Artifact of the triad, as function of the meaning and of the form (active/passive) of the verb itself;
c. searching for sequences of words containing at least one system component and a verb of the functionalities requested in a given field of application (significant verbs from a functional point of view).
d. assuming said component (referred to step c.) as the component of the triad, as function of the meaning and of the form (active/passive) of the verb itself.

**10.** Method according to Claim 9, **characterized in that** an external system is identified, said external system being a Tool or an Artifact of a functional triad TFA, so that it has not been recognized following criteria according to Claims 2 and 3.

**11.** Method according to Claim 1, **characterized in that** if a functional link is identified according to the method according to Claim 9, so that the Tool is a component of the system and the pair Field-Artifact can be translated into a function, the search for the Artifact of such a function can be demanded to a user or performed by looking for a first identified component following the preposition typically associated to that pair Field-Artifact

**12.** Method according to Claim 1, **characterized in that** all secondary products of the examined system are identified according to the following procedure:
a. each Artifact is assumed as a secondary product of the examined system;
b. a secondary product looses this property (so becoming a "standard" component of the system) in the following cases:
- in the detail level hierarchy a candidate secondary product has at least two abstraction levels above, i.e. its DL (Detail Level) is greater than or equal to 2;
- a number of functional interactions so that a candidate secondary product is a Tool that is greater than or equal to the number of functional interactions so that it is an Artifact.

**13.** Method according to Claim 1, **characterized in that** the main product of the examined system is identified, among all identified secondary products, as one whose ratio between the number of interactions so that said secondary product is an Artifact and the number of interactions so that said secondary product is a Tool, is maximum.

**14.** Method according to Claim 1, **characterized in that** the main product of the examined system is identified among all identified secondary products, as the one whose sum of the following different probability values is maximum:
a. checking if a secondary product is mentioned as an Artifact in the first two claims of the patent;
b. checking if a secondary product is mentioned as an Artifact in the abstract of the patent;
c. checking if a secondary product is mentioned as an Artifact in the title of the patent;
d. evaluating how many times the secondary products are mentioned in the whole patent and normalizing these values with respect to the maximum frequency; this normalized value multiplied by 100 is assumed as the partial probability value, but in any cases it must be lower than or equal to a predefined value;
e. checking if a secondary product is an Artifact of a Field present as a Field in the first two claims of the patent as well;
f. checking if a secondary product is an Artifact of a Field present as a Field in the abstract of the patent as well;
g. checking if a secondary product is an Artifact of a Field present as a Field in the title of the patent as well;
h. evaluating how many times the Fields acting on the secondary product (considered as an Artifact) are mentioned in the whole patent and normalizing these values with respect to the maximum frequency; this normalized value multiplied by 100 is assumed as the partial probability value, but in any cases it must be lower than or equal to a predefined value;
i. evaluating how many times the pairs Field-Artifact, so that the Artifact is a secondary product, are mentioned in the whole patent and normalizing these values with respect to the maximum frequency; this normalized value multiplied by 100 is assumed as the partial probability value, but in any cases it must be lower than or equal to a predefined value.

**15.** System for performing automatic analyses and comparisons of patents and technical descriptions of engineering systems according to the method of Claim 1, said system comprising:
- a Temporary Storage Database 20 in which a text to be analysed, entered by a user, is stored;
- a Database of Stop Words and Analogue Words 40 and (optionally) of a commercially available semantic processor (external to said system);
- a Text Analyser Module 30 by which the text is processed;
- a Database of Extracted Information 50;
- a Post Processing Module 60;
**characterized in that**:
- a Components Recognition module 31 allows identifying all system components described in the examined text (i.e. for a patent the components of the invention) ;
- a Components Classification Module 32 orders and classifies the identified components;
- an Interactions Analysis Module 33 allows identifying all functional links existing between the recognized components of the examined system;
- all identified links are stored in the Database of Extracted information 50;
- a Product Identification Sub-Module 35 identifies all secondary products and among these a main product of the examined system;
- the Post Processing Module 60 supplies the content of the Database of Extracted Information 50 to the user, organizing such data in different forms as function of the scope of the analysis.

**16.** System according to Claim 15, **characterized in that** the identification of all system components described in the examined text is performed with a commercially available semantic processor (for example Cobrain™, Knowledgist™, phrasys™, Semantic Explorer™, CREAX, Kiwilogic™ etc.), hence extracting from each sentence a triad TFA (Tool-Field-Artifact) through the following steps:
a. filtering the triads TFA (Tool-Field-Artifact) containing a Field belonging to set f) of the Stop Words and Analogue Words Database 40;
b. collecting the Tools and the Artifacts that have survived the previous filtering step;
c. (optionally) adding a further set of candidate components by using commonly available techniques to identify words representative of the content of a text (i.e. statistical analyses, cluster engine, Bayesian network etc.);
d. among all candidate components (Tool and Artifacts that survived the filtering phase) noun repetitions are eliminated also taking into account the synonyms list of set b) of the Stop Words and Analogue Words Database 40;
e. all remaining components are assumed as the components of the examined system.

**17.** System according to Claim 15, **characterized in that** the identification of the functional links existing between the recognized components of the examined system is performed with a commercially available semantic processor (for example Cobrain™, Knowledgist™, Phrasys™, Semantic Explorer™, CREAX, Kiwilogic™ etc.), hence extracting from each sentence a triad TFA (Tool-Field-Artifact) through the following steps:
a. if both Tool and Artifact are system components and the Field is not belonging to set f) of the Stop Words and Analogue Words Database, then that TFA triad is assumed as a basic functional block of the system;
b. otherwise, if just one among the Tool and the Artifact is a system component, but the Field is a verb of the functionalities requested in a given field of application, then the missing Tool/Artifact is assumed as an External Component of the system and the complete triad is assumed as a basic functional block of the system;
c. if a pair Field-Artifact among those extracted by the semantic processor belongs to set g) of the Stop Words and Analogue Words Database 40, then the subject of the verb is assumed as the Tool of the triad and the pair Field-Artifact is translated according to set g) table of the Stop Words and Analogue Words Database 40 in a functional Field.

**18.** System according to Claim 15, **characterized in that** attributes as "assembly", "part" or "portion" identifying the role of a component in the assembly described in the text can be transferred through commonly used data exchange formats like IGES, STEP, IDEF etc.

**19.** System according to Claim 15, **characterized in that** said attributes as "assembly", "part" or "portion" identifying the role of a component in the assembly described in the text can be linked to a geometric database of a CAD system as a direct link to a Feature Tree of a Part model and/or to an Assembly Tree of an Assembly model, hence integrating a conceptual model of a mechanical system to its embodiment.

**20.** System according to Claim 15, **characterized in that** all identified triads, as well a position in the examined text of the sentence from where such a triad has been extracted, are stored in the database of Extracted Information 50.

**21.** System according to Claim 15, **characterized in that** a position in the examined text of the sentence from where such a triad has been extracted, is evaluated just numbering with a sequential order all sentences of the examined text, distinguishing a sentence from another on the basis of the character "." or the ASCII character Carriage Return.

**22.** Post Processing module 60 of a system according to Claim 15, **characterized in that** a Text Content Module 61 represents:
a. each identified component of the system with its reference number and the representative name defined by the Components Recognition Module 31;
b. each identified component or subject external to the system;
c. the main product for internal/external components;
d. the detail level hierarchy determined by the Classification Module 32;
e. the functional interactions between the identified components according to the results of the Interactions Analysis Module 33.

**23.** Text Content Module 61 of a system according to Claim 22, **characterized in that** it represents:
- each identified component of the system by a rectangle labelled with its reference number and the representative name defined by the Components Recognition Module 31;
- each identified component or subject external to the system is represented by an hexagon labelled with the string "EXT";
- a sequential number and the representative name defined by the Components Recognition Module 31;
- the main product by an ellipse labelled with the same criteria illustrated above for internal/external components;
- the detail level hierarchy determined by the Classification Module 32 represented nesting the components at a deeper detail level inside the components at a more abstract level;
- the functional interactions between the identified components is represented with arrows pointing from the Tool to the Artifact, labelled with the Field, according to the results of the Interactions Analysis Module 33.

**25.** Post Processing Module 60 of a system according to Claim 22, **characterized in that** said Text Content Module 61 represents:
a. a list of components with their detail level DL and a corresponding supersystem;
b. a list of secondary products as pairs Field-Artifact with their main product probability value MPPV;
c. a list of partial probability values evaluated according to the procedure detailed in the description of the Products Identification Sub-Module 35;
d. a list of functional interactions between the identified components.

**25.** Post Processing Module 60 of a system according to Claim 22, **characterized in that** a Text Comparison Module 62 allows the comparison between two or more systems descriptions according to the following parameters:
a. comparison between a "system diameter", that is a number of detail levels identified by the Components Classification Module 32;
b. comparison between a number of internal components of the examined systems, both taking into account the whole list of identified components and each detail level;
c. (if the analysis of the Mechanical Embodiment Analysis Sub-Module 36 has been performed) comparison between a number of "assembly", "part" and "portion" of the examined systems;
d. comparison between a number of interactions identified by the Interactions Analysis Module 33; if two or more Fields are associated to the same pair Tool/Artifact a check to eliminate synonymous Fields is performed taking into account the set i) of the Stop Words and Analogue Words Database 40;
e. comparison between a number of interactions (counted as in step d) acting on components at a same Detail Level; it can be highlighted if these components belong to the same supersystem or not;
f. comparison between a number of interactions (counted as in step d) acting on components at a different Detail Level; it can be highlighted if these components are one subsystem of the other or not; it is also taken into account the "hierarchical distance" between the interacting components, i.e. the difference between their detail levels;
g. comparison between number and lengths of branches being present in the functional diagram of the examined systems (as the one in Fig. 6) evaluated starting from a Main Product of the systems themselves;
h. comparison of components at a same rank: the rank of a component is defined as a minimum distance, in terms of number of interactions, that links the Main Product of the system with the component itself;
i. analysis of a detail level run along the description of the examined system: the Interactions Analysis Module 33 stores a position in the text of each identified interaction TFA; the detail level of the Tool and the Artifact in a sentence is assumed as the detail level of the description, hence it is possible to analyse the detail level run in the examined test and to compare such a run in different texts.

**26.** Post Processing Module 60 of a system according to Claim 22, **characterized in that** the analysis of the peaks of the Detail Level runs along the description of a system allowing the identification of the core and the secondary peculiarities of the system itself.

**27.** Post Processing Module 60 of a system according to Claim 22, **characterized in that** a Database of Functional Usage of Components in Different Systems 63 stores all functional interactions associated to homonymous components in all examined texts, recording a reference to a source text and the role of the component in the TFA triad.

**28.** Post Processing Module 60 of a system according to Claim 22, **characterized in that** a Database of Components Capable of Performing a Given Function 64 stores:
a. all Tools associated with homonymous Fields found in all examined texts, recording a reference to a source text and a complete TFA triad;
b. all Tools associated with homonymous pairs Fields-Artifacts found in all examined texts, recording the reference to the source text and the complete TFA triad.

**29.** Stop Words and Analogue Words Database 40 of a system according to Claim 15, **characterized in that** it is constituted by eight set of words, all customisable by a user through the following automatic extraction procedure:
a) the user supplies to the system a set of typical documents of the field of application he is interested in;
b) a semantic analysis is performed through a commercially available semantic processor (for example Cobrain™, Knowledgist™, Phrasys™, Semantic Explorer™, Kiwilogic™ etc.) and a table of Tools and Artifacts and their occurrence is stored;
c) by comparing the table defined in the previous step and the complete Database 40 it is possible to customise automatically the Filters and Synonyms lists, hence creating typical subsets of the Database 40 labelled with the field of application of the documents processed at the step 1).

**30.** Stop Words and Analogue Words Database 40 of a system according to Claim 29, **characterized in that** said database is constituted by the following sets:
a) list of stop keywords for words adjacent to numeric characters during the Components Recognition task; this set is typically constituted by references to Figures, Patents or other documents, units etc.
b) table of synonyms of candidate components, at different detail level (for example, portion, side, end; piston, plunger etc.);
c) list of typical Fields of the functionalities requested in a given field of application;
d) table of descriptive verbs like "to comprise", "to be made of", "to be constituted by", etc., such a list having to take into account all forms that these verbs can assume, also due to conjugation irregularities;
e) list of terms describing a portion of a component, as "end", "side", "face", "part" etc.
f) list of verbs not significant from a functional point of view;
g) g) table of the pairs Field-Artifact, their translations in a functional verb and one or more prepositions typically associated to that locution, used to search the Artifact automatically;
h) table of synonyms of functional verbs representing a Field.

**31.** System according to Claim 15, **characterized in that** the customisations of the following systems are allowed:
a. activities of Components Recognition Module 31, Component Classification Module 32 and Interactions Analysis Module 33 can be followed step by step by the user, who may compare the extracted information with its source sentence, or can be performed automatically even if with a lower reliability;
b. the user can specify a list of components (Tools/Artifacts) and/or functions (Fields) to focus the Interactions Analysis on, so that just the corresponding functional sub-diagrams are extracted;
c. the search for Secondary Products and/or the Main product of the examined systems can be limited to the components external to those systems.
